# EUROPÄISCHE PATENTANMELDUNG

(11) **EP 2 629 257 A1**
(43) Veröffentlichungstag der Anmeldung: **21.08.2013**
(21) Anmeldenummer: 12001101.0
(22) Anmeldetag: 20.02.2012
(51) Int. Cl.: G06Q 20/20

(54) **Verfahren zum Erkennen und Darstellen von Artikeln eines Warensortiments und Kassensystem, das mit diesen Verfahren arbeitet**

(71) Anmelder: AWEK GmbH, 22885 Barsbüttel (DE)
(72) Erfinder: Stobbe, Nicolas, 22299 Hamburg (DE)
(74) Vertreter: Tönhardt, Marion

(57) **Zusammenfassung**

Die Erfindung beschreibt ein Verfahren zum Erkennen und Darstellen von Artikeln eines Warensortiments, mit den Schritten:
- Bereitstellen einer Datenbank in einer Speichereinrichtung, die mit einer Recheneinheit kommuniziert, welche in Datensätzen geordnete Daten über zumindest eine Vielzahl von Artikeln enthält, wobei ein Datensatz umkehrbar eindeutig einem Artikel zugeordnet ist und wobei jedem Datensatz eindeutig eine grafische oder bildliche Darstellung des Artikels zugeordnet ist;
- Heranführen eines mit einem Informationsträger versehenen Artikels an eine Lesestation, wobei der Informationsträger Daten enthält, die dem Artikel zugeordnet sind;
- an der Lesestation Auslesen zumindest eines Teils der in dem Informationsträger vorhandenen Daten, der ausreichend ist, um den Artikel eindeutig zu identifizieren, und Eingeben der Daten in die Recheneinheit;
- Vergleichen der Daten aus dem Informationsträger mit Daten in den Datensätzen durch die Recheneinheit und Bestimmen des zu dem Artikel gehörenden Datensatzes;
- Abrufen der dem Datensatz zugeordneten grafischen oder bildlichen Darstellung des Artikels; und
- Anzeigen der grafischen oder bildlichen Darstellung des Artikels auf einem Grafik-Bildschirm.

## Beschreibung

Die Erfindung betrifft ein Verfahren zum Erkennen und Darstellen von Artikeln eines Warensortiments sowie ein Kassensystem, das mit diesem Verfahren arbeitet.

Im Fashion-Bereich ist es üblich, dass Artikel eines Warensortiments mit Informationsträgern, versehen sind, die beispielsweise als Barcode-Labels oder RFID-Tags ausgebildet sein können, wobei der Informationsträger Daten enthält, die dem Artikel zugeordnet sind, beispielsweise die Art des Artikels, wie Bluse, Jacke, Hose, Preis, Größe oder dergleichen.

Beim Bezahlvorgang an einem Kassensystem werden diese Informationsträger mittels eines Lesegerätes oder an einer Lesestation ausgelesen und die erhaltenen Daten in einer Recheneinheit alphanumerisch aufbereitet, so dass schließlich, je nach Anzahl zu kaufender Artikel, eine mehr oder weniger lange Liste mit den relevanten Daten der Artikel, einschließlich der zu zahlenden Endsumme, erstellt ist.

Im normalen Ablauf hat sich diese Vorgehensweise bewährt. Probleme treten aber auf, wenn der Kunde einen Artikel nicht mehr wünscht und dieser storniert werden muss. Dann muss der Artikel mühsam in der Liste aufgesucht und ein entsprechender Löschprozess vorgenommen werden. Außerdem ist der beschriebene Ablauf anfällig für Manipulation. So wird es auch dem erfahrenen Verkaufspersonal im hektischen Ladenbetrieb kaum auffallen, wenn beispielsweise ein Barcode-Label von einer kostengünstigeren Fremdware abgenommen worden ist und nun die Bezahlinformation für den teureren Artikel liefern soll.

Es ist daher die Aufgabe der Erfindung, ein Verfahren zum Erkennen und Darstellen von Artikeln eines Warensortiments zur Verfügung zu stellen, das eine einfache Eingabekorrektur ermöglicht und das eine Manipulation des Informationsträgers schnell erkennen lässt.

Diese Aufgabe wird durch ein Verfahren nach Anspruch 1 gelöst. Vorteilhafte Ausgestaltungen sind Gegenstand der Unteransprüche. Ein Kassensystem, das mit diesem Verfahren arbeitet, ist in Anspruch 6 angegeben.

Das erfindungsgemäße Verfahren zum Erkennen und Darstellen von Artikeln eines Warensortiments umfasst die Schritte:
- Bereitstellen einer Datenbank in einer Speichereinrichtung, die mit einer Recheneinheit kommuniziert, welche in Datensätzen geordnete Daten über zumindest eine Vielzahl von Artikeln enthält, wobei ein Datensatz umkehrbar eindeutig einem Artikel zugeordnet ist und wobei jedem Datensatz eindeutig eine grafische oder bildliche Darstellung des Artikels zugeordnet ist;
- Heranführen eines mit einem Informationsträger versehenen Artikels an eine Lesestation, wobei der Informationsträger Daten enthält, die dem Artikel zugeordnet sind;
- an der Lesestation Auslesen zumindest eines Teils der in dem Informationsträger vorhandenen Daten, der ausreichend ist, um den Artikel eindeutig zu identifizieren, und Eingeben der Daten in die Recheneinheit;
- Vergleichen der Daten aus dem Informationsträger mit Daten in den Datensätzen durch die Recheneinheit und Bestimmen des zu dem Artikel gehörenden Datensatzes;
- Abrufen der dem Datensatz zugeordneten grafischen oder bildlichen Darstellung des Artikels; und
- Anzeigen der grafischen oder bildlichen Darstellung des Artikels auf einem Grafik-Bildschirm.

Die Erfindung bedeutet ein völliges Abrücken von der bisher üblichen alphanumerischen Listendarstellung unter Ausnutzung der technischen Möglichkeiten eines Grafik-Bildschirms, der nach einer vorteilhaften Ausgestaltung zudem die Möglichkeit der Interaktion bietet.

Die Gestaltung einer Benutzeroberfläche ist dem Fachmann an sich bekannt, und er wird Anwählfelder zur Verfügung stellen, die mit Hilfe einer Maus oder direkt mit dem Finger, falls der Grafik-Bildschirm als Berührungsbildschirm ausgestaltet ist, betätigt werden können. Mit der Erfindung wird die Korrektur von Eingaben, beispielsweise das Stornieren eines Artikels, sehr einfach, indem beispielsweise lediglich auf die grafische Darstellung zugegriffen wird, die dann Artikeldaten freigibt, welche durch einen Mausklick oder einen Touch zu löschen sind. Auch eine Manipulation des Informationsträgers am Artikel lässt sich leicht erkennen, wenn zum Beispiel der Informationsträger eine grafische oder bildliche Darstellung hervorruft, die nicht mit dem Artikel übereinstimmt, an dem er angebracht ist.

Nach einer vorteilhaften Ausgestaltung des Verfahrens erfolgt das Anzeigen von Preisinformation in der Umgebung der grafischen oder bildlichen Darstellung des Artikels auf dem Grafik-Bildschirm. Die eher intuitive Art der Zuordnung wird beibehalten, so dass Übersichtlichkeit gewonnen wird.

Bei einer Ausgestaltung des Verfahrens, bei dem die Artikel Kleidungsstücke sind, kann weiterhin das Bereitstellen zumindest einer Vorlage, die auf dem Bildschirm angezeigt wird, wobei die Vorlage einem menschlichen oder tierischen Körper entspricht; und das Anzeigen des Kleidungsstückes an der bestimmungsgemäßen Position auf der Vorlage vorgesehen sein.

Oftmals entsteht auch die Situation, dass nicht nur ein Artikel, sondern ein weiterer identischer oder ähnlicher Artikel gekauft wird, beispielsweise zwei oder mehr Pullover in unterschiedlicher Ausgestaltung. In diesem Fall, wenn die Artikel somit in Artikelgruppen sortiert sind, kann das Verfahren weiter die Schritte umfassen:
- wenn ein weiterer Artikel aus derselben Artikelgruppe anzuzeigen ist, Anzeigen der grafischen oder bildlichen Darstellung des weiteren Artikels im Wesentlichen deckungsgleich mit der grafischen oder bildlichen Darstellung des ersten Artikels; und
- Anzeigen der Preisinformation in Form einer Liste in der Umgebung der grafischen oder bildlichen Darstellung des Artikels.

"Im Wesentlichen deckungsgleich" bedeutet dabei, dass die grafischen oder bildlichen Darstellungen faktisch übereinander liegen, aber auch abgestaffelt dargestellt sein können.

Hierbei kann dann weiter vorgesehen sein, dass die Listen interaktiv durch einen Benutzer geändert werden können, wobei ein automatisches Angleichen der grafischen oder bildlichen Darstellung der Artikel geschieht.

Ein erfindungsgemäßes Kassensystem zum Erkennen und Darstellen von Artikeln eines Warensortiments und zum Abrechnen und Bezahlen ausgewählter Artikel umfasst eine Lesestation zum Auslesen von Information, die in einem an einem Artikel angebrachten Informationsträger bereitgestellt ist, eine Recheneinheit, die in einem ersten Modus zum Erkennen und Darstellen von Waren und in einem zweiten Modus zum Abrechnen und Bezahlen ausgewählter Artikel betreibbar ist und die mit einer Speichereinrichtung kommuniziert, und einen Grafik-Bildschirm, wobei die Recheneinheit in dem ersten Modus zum Erkennen und Darstellen von Waren das Verfahren nach einem der Ansprüche 1 bis 5 ausführt. Wieder ist es bevorzugt, dass der Grafik-Bildschirm ein interaktiver Bildschirm ist.

Im Folgenden soll die Erfindung anhand der beigefügten Zeichnung näher erläutert werden, die eine bevorzugte Ausführungsform veranschaulicht. Es zeigt:
- Figur 1: eine Darstellung auf einem Grafik-Bildschirm, die eine Startansicht zeigt, wenn das Verfahren der Erfindung ausgeführt wird;
- Figur 2: eine Ansicht des Grafik-Bildschirms zu einem späteren Zeitpunkt des Erkennungsverfahrens; und
- Figur 3: eine Ansicht des Grafik-Bildschirms, mit dem ein Bezahlvorgang veranschaulicht werden soll.

Die Erfindung wird im Folgenden im Zusammenhang mit dem Verkaufsablauf in einer Boutique für Damen- oder Herrenmode veranschaulicht, weitere Anwendungen sind denkbar, beispielsweise in Unterwäscheboutiquen, Kinderboutiquen, Tierboutiquen, insbesondere Hundeboutiquen und dergleichen.

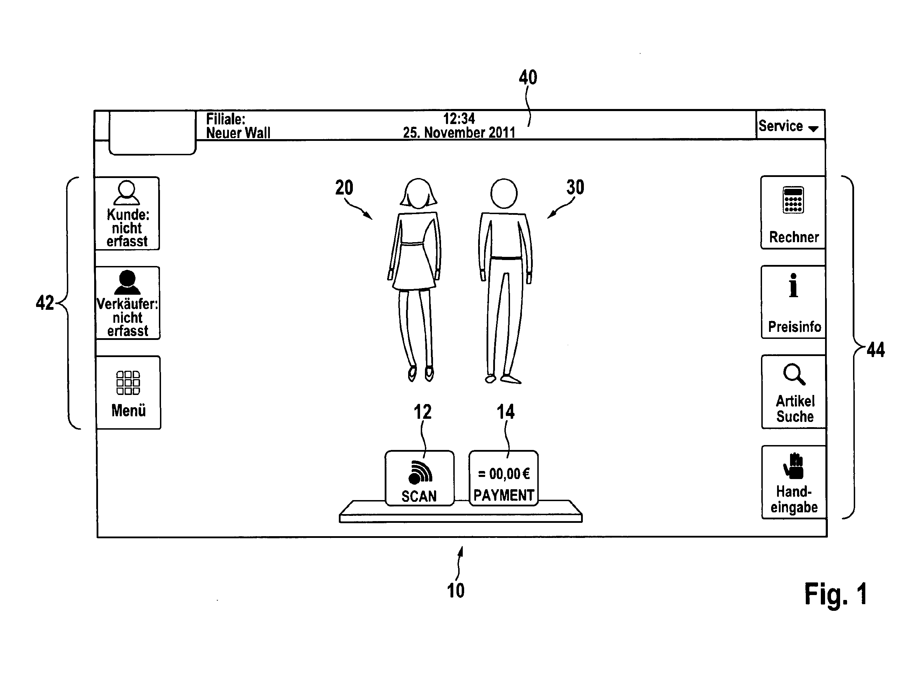

Figur 1 zeigt eine Ansicht eines Grafik-Bildschirms, der bei der beschriebenen Ausführungsform ein interaktiver Bildschirm ist, der als Touchscreen verkörpert ist. Andere Ausführungsformen für den Grafik-Bildschirm sind möglich, beispielsweise solche, bei denen ein Cursor mit Hilfe einer Maus, eines Touchpad oder dergleichen bewegt wird.

Auf der Ansicht befindet sich im unteren Randbereich eine schematisch dargestellte Docking-Station 10, in der zwei Tastfelder 12, 14 aufgestellt sind, von denen das erste mit "Scan" und das zweite mit "Payment" bezeichnet ist. Durch Aktivieren eines dieser Tastfelder, im Folgenden auch als "Anklicken" bezeichnet, wird der Betriebsmodus der Recheneinheit des Kassensystems gewählt, nämlich ein erster Modus zum Erkennen und Darstellen von Waren durch Anklicken des Tastfeldes 12 "Scan" oder ein zweiter Modus zum Abrechnen und Bezahlen ausgewählter Artikel durch Anklicken des Tastfeldes 14 "Payment". Oberhalb der Docking-Station 10 sind schematisch als Vorlage eine Frau 20 und ein Mann 30 in farblich neutraler Kleidung dargestellt. Es versteht sich, dass abhängig von der Anwendung der Erfindung ein Kind, ein Tier, beispielsweise ein Hund, oder anderes mehr oder weniger symbolisch veranschaulicht werden kann.

Eine obere Leiste 40 der Ansicht enthält Metadaten, beispielsweise über die Filiale, Datum und Uhrzeit usw. Auch kann vorgesehen sein, dass an den linken und rechten Rändern der Ansicht weitere Tastfelder 42, 44 vorgesehen sind, zum Beispiel für die Kundenerfassung, die Verkäufererfassung oder für kundenspezifisch einzustellende Funktionen, was aber nicht Gegenstand der Erfindung ist und daher hier nicht näher beschrieben wird.

Bei der Bildschirmansicht ist zu erkennen, dass große Freiflächen vorhanden sind, so dass der Benutzer intuitiv auf die Docking-Station 10 bzw. die dargestellten Figuren 20, 30 gelenkt wird.

Durch Anklicken des Tastenfeldes 12 "Scan" wird nun das Verfahren zum Erkennen und Darstellen von Artikeln eines Warensortiments gemäß der vorliegenden Erfindung initiiert. Vorab ist eine Datenbank in einer Speichereinrichtung bereitgestellt worden, die mit einer Recheneinheit kommuniziert. Diese Recheneinheit kann sich im Kassentisch selbst befinden oder eine entfernt davon angeordnete zentrale Recheneinheit sein, mit der die Speichereinrichtung über an sich bekannte Techniken kommuniziert, die kabelgebunden oder kabellos basiert sein können, beispielsweise über ein lokales Netzwerk oder dergleichen. Die Datenbank enthält, neben anderer Information, in Datensätzen geordnete Daten über zumindest eine Vielzahl von Artikeln, wobei ein Datensatz umkehrbar eindeutig einem Artikel zugeordnet ist und wobei jedem Datensatz eindeutig eine grafische oder bildliche Darstellung des Artikels zugeordnet ist. Es identifiziert also jeder Datensatz genau einen Artikel, von dem durchaus mehrere Exemplare vorliegen können, umgekehrt weist jeder Artikel auf genau einen Datensatz. Jedem Datensatz ist eindeutig eine grafische oder bildliche Darstellung des Artikels zugeordnet, so dass beispielsweise für jeden Datensatz, der den Artikel "Pullover" beschreibt, eine grafische oder bildliche Darstellung eines Pullovers zugewiesen wird.

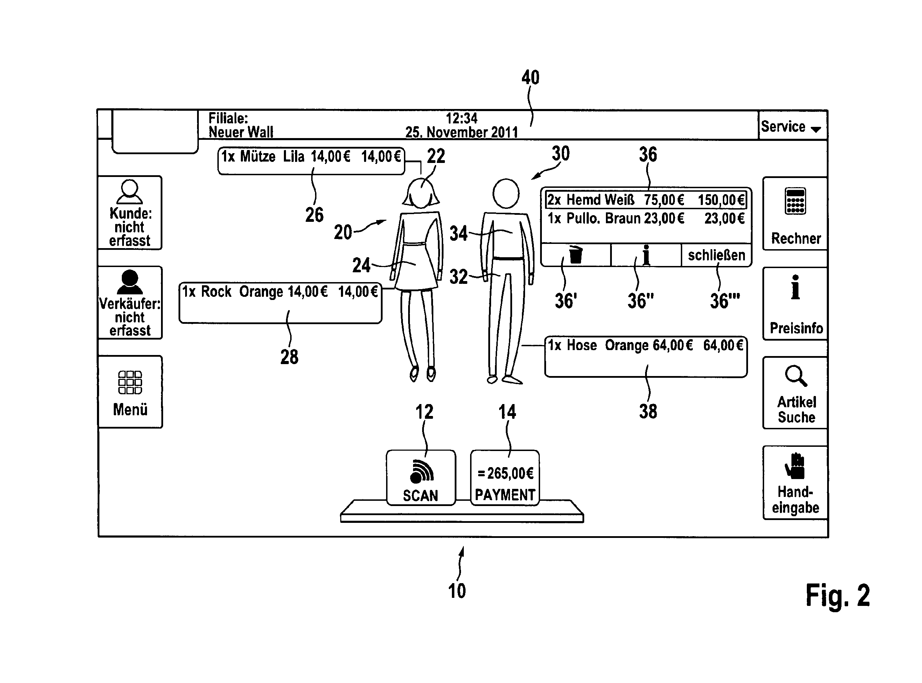

Figur 2 zeigt die Bildschirmansicht, wenn schon einige Artikel eines Warensortiments erkannt und dargestellt worden sind. Die Artikel sind nacheinander an eine Lesestation herangeführt worden, wobei die Lesestation auch ein in der Hand zu haltendes Lesegerät sein kann. Ein am Artikel angebrachter Informationsträger enthält Daten über den Artikel, die an der Lesestation bzw. durch das Lesegerät ausgelesen werden, zumindest in einem Umfang, der ausreichend ist, um den Artikel eindeutig zu identifizieren. Diese Daten werden in die Recheneinheit eingegeben. Im vorliegenden Beispiel sind eine Mütze 22 und ein Rock 24 für eine Dame 20 sowie eine Hose 32 und Oberbekleidung 34 für einen Herrn 30 eingegeben worden. Es ist zu erkennen, dass die tatsächliche Farbe des Artikels nicht notwendigerweise mit der dargestellten Farbe der grafischen oder bildlichen Darstellung des Artikels übereinstimmt. Auch hier geht es darum, den Bildschirminhalt nicht mit Information zu überfrachten, sondern den Blick des Benutzers auf das Wesentliche zu lenken. Neben allgemeiner Information über den erkannten und dargestellten Artikel ist auch Preisinformation 26, 28, 36, 38 dargestellt, und zwar jeweils in der Umgebung der grafischen oder bildlichen Darstellung des Artikels auf dem Grafik-Bildschirm. Im vorgestellten Beispiel sind als Oberbekleidungsstücke 34 für einen Herrn 30 zwei Hemden und ein Pullover erkannt worden. Um die Darstellung einfach zu halten, sind nun nicht drei grafische oder bildliche Darstellungen des Artikels zu sehen, sondern jeder weitere Artikel ist im Wesentlichen deckungsgleich mit der grafischen oder bildlichen Darstellung des ersten Artikels gezeigt.

Entscheidet sich der Kunde während des ersten Betriebsmodus der Recheneinheit anders, so kann er die Informationsleiste des Artikels anklicken, woraufhin sich weitere Fenster öffnen. Durch entsprechendes Anklicken der neu aufgezeigten Tastfelder 36', 36", 36"' kann der Artikel verworfen werden, mehr Information darüber eingeholt werden oder der Vorgang abgebrochen werden.

Es sei angemerkt, dass das zweite Tastenfeld 14 "Payment" der Docking-Station 10 immer eine Übersicht über den Gesamtbetrag anzeigt.

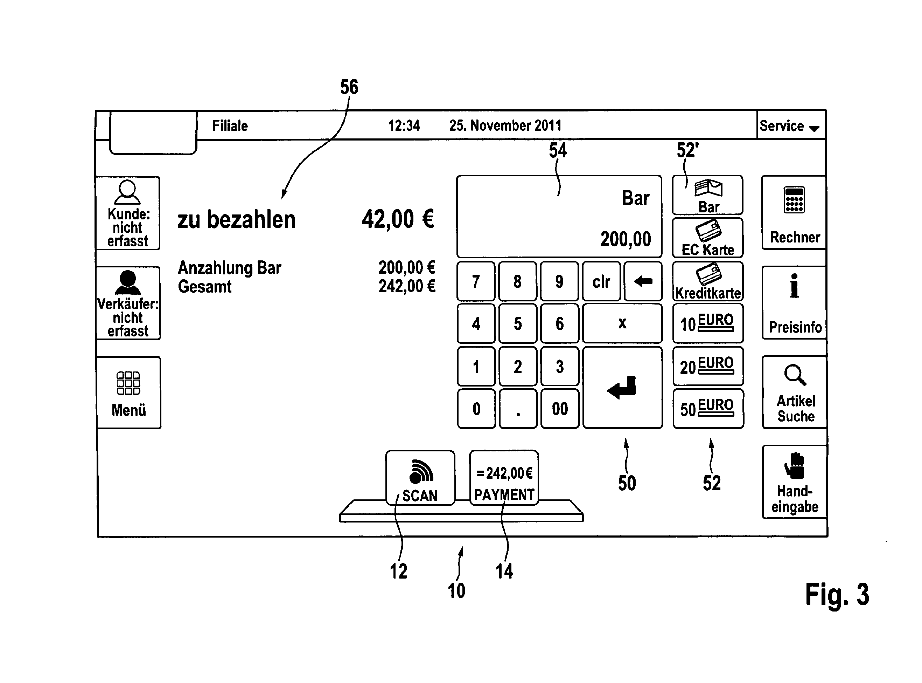

Wenn der Erkennungs- und Darstellungsvorgang abgeschlossen ist, wird das Tastenfeld "Payment" angeklickt, um den Bezahlvorgang einzuleiten. Es öffnet sich, wie in Figur 3 zu sehen, oberhalb der Docking-Station 10 ein Fenster, das eine Tastatur 50 zum Eingeben von Beträgen, Tastfelder 52 zum Eingeben der Bezahlart und Anzeigefelder 54, 56 für die jeweiligen Beträge bzw. Zahlarten umfasst. Im vorliegenden Beispiel sollen von 242,00 €, wie im Tastenfeld 14 "Payment" angezeigt, zunächst 200,00 € bar bezahlt werden. Durch Eingeben des Betrages auf der Tastatur 50 und Anklicken des Tastenfeldes 52' "Bar" wird der Betrag quittiert und mit dem Gesamtbetrag verrechnet, so dass jetzt noch 42,00 € zu zahlen sind. Dies kann beispielsweise mittels Kreditkarte geschehen, die in entsprechender Weise aktiviert wird.

Wenn der Bezahlvorgang beendet ist, geht die Recheneinheit, gegebenenfalls verzögert, wieder in den ersten Modus zum Erkennen und Darstellen von Artikeln eines Warensortiments über.

In der Datenbank kann außerdem eine Kundendatei und/oder eine Verkäuferdatei angelegt sein. Kundendaten könnten manuell über eine virtuelle Tastatur auf dem Bildschirm eingegeben oder von einer Kundenkarte über die Lesestation eingelesen werden. Dies bietet die Möglichkeit, Information über das Kauf- und/oder Bezahlverhalten zu gewinnen, das entsprechend grafisch aufbereitet und ausgewertet werden kann. Entsprechendes gilt für Verkäuferdaten, beispielsweise hinsichtlich Umsatz, Kundenstamm usw.

Durch die großen Freiflächen der Bildschirmansicht können diese wirksam an das Ladendesign angepasst werden. Farben und Hintergründe können beliebig geändert werden, ohne dass das Bedienkonzept an sich verändert würde. Zum Beispiel kann als Bildschirmhintergrund eine Lederoptik gewählt werden, die einen hochwertigeren Eindruck vermittelt, beispielsweise in einem Geschäft für Lederwaren.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Erkennen und Darstellen von Artikeln eines Warensortiments, mit den Schritten:
- Bereitstellen einer Datenbank in einer Speichereinrichtung, die mit einer Recheneinheit kommuniziert, welche in Datensätzen geordnete Daten über zumindest eine Vielzahl von Artikeln enthält, wobei ein Datensatz umkehrbar eindeutig einem Artikel zugeordnet ist und wobei jedem Datensatz eindeutig eine grafische oder bildliche Darstellung des Artikels zugeordnet ist;
- Heranführen eines mit einem Informationsträger versehenen Artikels an eine Lesestation, wobei der Informationsträger Daten enthält, die dem Artikel zugeordnet sind;
- an der Lesestation Auslesen zumindest eines Teils der in dem Informationsträger vorhandenen Daten, der ausreichend ist, um den Artikel eindeutig zu identifizieren, und Eingeben der Daten in die Recheneinheit;
- Vergleichen der Daten aus dem Informationsträger mit Daten in den Datensätzen durch die Recheneinheit und Bestimmen des zu dem Artikel gehörenden Datensatzes;
- Abrufen der dem Datensatz zugeordneten grafischen oder bildlichen Darstellung des Artikels; und
- Anzeigen der grafischen oder bildlichen Darstellung des Artikels auf einem Grafik-Bildschirm.

2. Verfahren nach Anspruch 1, weiter mit dem Schritt:
- Anzeigen von Preisinformation in der Umgebung der grafischen oder bildlichen Darstellung des Artikels auf dem Grafik-Bildschirm.

3. Verfahren nach Anspruch 1 oder 2, bei dem die Artikel Kleidungsstücke sind, weiter mit den Schritten:
- Bereitstellen zumindest einer Vorlage, die auf dem Bildschirm angezeigt wird, wobei die Vorlage einem menschlichen oder tierischen Körper entspricht; und
- Anzeigen des Kleidungsstückes an der bestimmungsgemäßen Position auf der Vorlage.

4. Verfahren nach einem der Ansprüche 1 bis 3, bei dem die Artikel in Artikelgruppen sortiert sind, weiter mit den Schritten:
- wenn ein weiterer Artikel aus derselben Artikelgruppe anzuzeigen ist, Anzeigen der grafischen oder bildlichen Darstellung des weiteren Artikels im Wesentlichen deckungsgleich mit der grafischen oder bildlichen Darstellung des ersten Artikels; und
- Anzeigen der Preisinformation in Form einer Liste in der Umgebung der grafischen oder bildlichen Darstellung des Artikels bzw. der Artikel.

5. Verfahren nach Anspruch 4, weiter mit den Schritten:
- interaktives Ändern der Listen durch einen Benutzer; und
- automatisches Angleichen der grafischen oder bildlichen Darstellung der Artikel.

6. Kassensystem zum Erkennen und Darstellen von Artikeln eines Warensortiments und zum Abrechnen und Bezahlen ausgewählter Artikel, mit
einer Lesestation zum Auslesen von Information, die in einem an einem Artikel angebrachten Informationsträger bereitgestellt ist;
einer Recheneinheit, die
- in einem ersten Modus zum Erkennen und Darstellen von Artikeln eines Warensortiments und
- in einem zweiten Modus zum Abrechnen und Bezahlen ausgewählter Artikel betreibbar ist und die mit einer Speichereinrichtung kommuniziert; und
einem Grafik-Bildschirm,
wobei die Recheneinheit in dem ersten Modus zum Erkennen und Darstellen von Waren das Verfahren nach einem der Ansprüche 1 bis 5 ausführt.

7. Kassentisch nach Anspruch 6, bei dem der Grafik-Bildschirm ein interaktiver Bildschirm ist.
